# EUROPEAN PATENT APPLICATION

(11) **EP 4 592 517 A1**
(43) Date of publication of application: **30.07.2025**
(21) Application number: 25151030.1
(22) Date of filing: 09.01.2025
(51) Int. Cl.: F02M 21/02, F02M 61/16

(54) **GAS FUEL INJECTOR**

(30) Priority: 26.01.2024 JP 2024010602
(71) Applicant: Nikki Co., Ltd., Atsugi, Kanagawa 243-0801 (JP)
(72) Inventor: Murakami, Tsutomu, Atsugi-shi, 243-0801 (JP); Aizawa, Shutaro, Atsugi-shi, 243-0801 (JP); Kaneko, Naokazu, Atsugi-shi, 243-0801 (JP)
(74) Representative: Boult Wade Tennant LLP

(57) **Abstract**

Make it possible to adjust a dynamic flow rate in an injector including an electromagnetic valve of a type in which the valve is closed by attracting a valve body to a valve seat.

A gas fuel injector (1) of an electromagnetic drive type includes a cylindrical main body (10), an opening/closing valve (20) and a solenoid (30) configured to open the opening/closing valve (20). The opening/closing valve (20) includes a valve body (21). The valve body (21) configured to reciprocate together with a plunger (33) constituting the solenoid (30). The plunger (33) is fixed to a retainer (40) provided on an upstream side of the opening/closing valve (20). The retainer (40) is installed between a closing spring (41) configured to bias the plunger (33) in a valve closing direction and an adjustment spring (42) configured to bias the plunger (33) in a valve opening direction.

## Description

### Technical Field

The present invention relates to a normally closed gas fuel injector for directly injecting gas fuel of a flow rate required by an engine driven by gas fuel, such as hydrogen gas, LPG, and CNG, directly into a cylinder.

### Related Art

Conventionally, there is widely known an electromagnetic drive type injector that operates an opening/closing valve by energizing and exciting an electromagnetic coil to inject fuel of a flow rate required by an engine into a cylinder.

An electromagnetic opening/closing valve (electromagnetic valve) is classified into a normally open type or a normally closed type and is also classified into either a type in which the valve is closed by pressing a valve body against a valve seat or a type in which the valve is closed by attracting a valve body to a valve seat.

In an injector for in-cylinder direct injection, an electromagnetic valve of a type in which the valve is closed by pressing a valve body against a valve seat has an effect of preventing unintended valve opening (valve leakage) due to an increase in in-cylinder pressure, and in order to adjust a dynamic flow rate, it has been common to adjust opening/closing valve delay time of the valve by adjusting a set load of a spring that generates a load in a valve closing direction.

However, in an injector including an electromagnetic valve of a type in which the valve is closed by attracting a valve body 2A to a valve seat 3A, such as a fuel injection device 1A described in JP 2009-526157 A (Patent Literature 1) (see FIG. 2 in the attached drawings), it has been structurally difficult to adjust a set load of a spring 4A, so that it has been difficult to adjust a dynamic flow rate.

Therefore, it has been required to make it possible to adjust a dynamic flow rate even in an injector including an electromagnetic valve of a type in which the valve is closed by attracting a valve body to a valve seat.

### Citation List

### Patent Literature

Patent Literature 1: JP 2009-526157 A

### Summary of Invention

### Technical Problem

An object of the present invention is to make it possible to adjust a dynamic flow rate in an injector including an electromagnetic valve of a type in which the valve is closed by attracting a valve body to a valve seat.

### Solution to Problem

The present invention made to solve the above problems is a gas fuel injector of an electromagnetic drive type, the gas fuel injector being configured to directly inject gas fuel into a cylinder of an engine, the gas fuel injector including: a cylindrical main body in which a fuel passage is formed; an opening/closing valve disposed in the main body and configured to open and close the fuel passage; a solenoid disposed in the main body and configured to open the opening/closing valve at the time of energization; and a nozzle provided at a distal end portion of the main body on a downstream side of the opening/closing valve, the nozzle having an injection hole formed at its tip, the injection hole being inserted into the cylinder. In which the opening/closing valve includes a valve body fixed to a plunger constituting the solenoid and configured to reciprocate in an axial direction together with the plunger, and a valve seat configured to come into contact with and be separated from the valve body to open and close the fuel passage, the plunger is fixed to a retainer provided on a proximal end side of the main body, the proximal end side being an upstream side of the opening/closing valve, and the retainer is installed between a closing spring configured to bias the plunger in a valve closing direction and an adjustment spring configured to bias the plunger in a valve opening direction.

As described above, the retainer is fixed to the valve body, and the closing spring configured to bias the retainer in the valve closing direction and the adjustment spring configured to bias the retainer in the valve opening direction are combined, so that a dynamic flow rate can be adjusted according to set loads of both the springs.

In the present invention, in a case where the set load of the adjustment spring is set by a plug attached from the proximal end side of the main body, the adjustment spring can be easily assembled.

In the present invention, in a case where a position of the plug can be changed in the axial direction and the set load of the adjustment spring can be adjusted by the position of the plug, it is possible, for example, to set a plurality of set loads using one type of adjustment spring and to absorb variations during manufacturing, and the like.

### Advantageous Effects of Invention

According to the present invention makes it possible to easily adjust to a dynamic flow rate in an injector including an electromagnetic valve of a type in which a valve is closed by attracting a valve body to a valve seat.

### Brief Description of Drawings

FIG. 1 is a longitudinal sectional view illustrating a main part of a preferred embodiment of a gas fuel injector according to the present invention; and

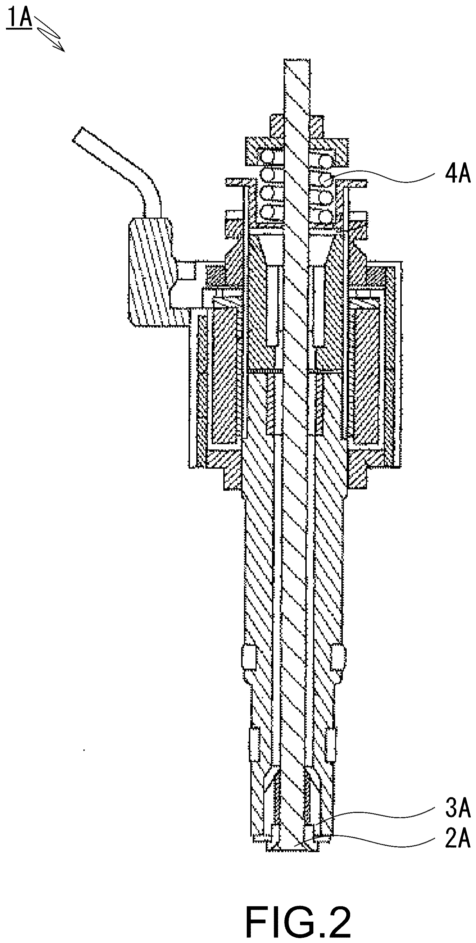

FIG. 2 is a longitudinal sectional view illustrating a conventional fuel injection device.

### Description of Embodiments

Hereinafter, an embodiment of the present invention will be described with reference to the drawings. Note that in the present specification, gas fuel refers to fuel that is supplied to an engine in a gas state, such as hydrogen gas, LPG, CNG, or LNG, and burned.

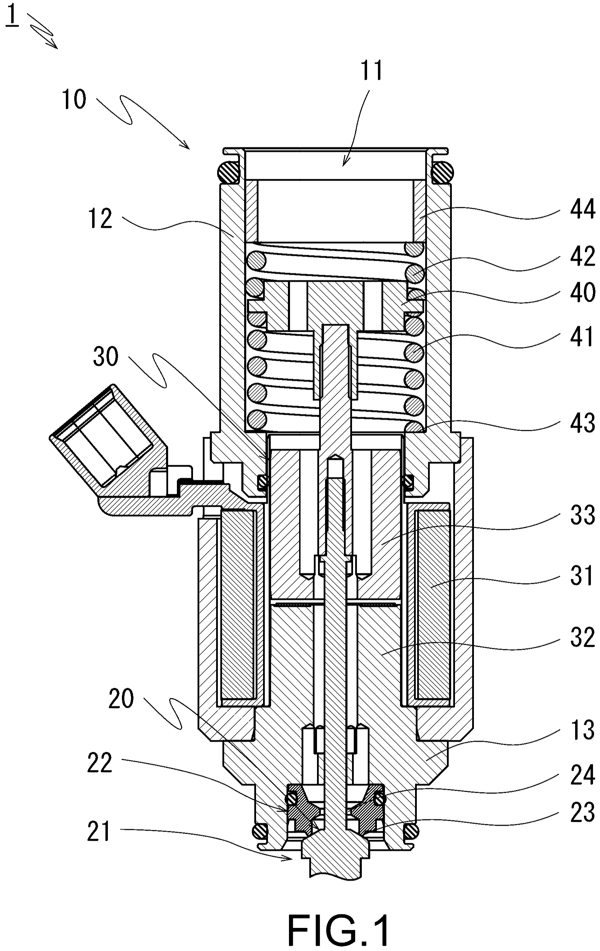

FIG. 1 is a longitudinal sectional view illustrating a main part of a preferred embodiment of a gas fuel injector according to the present invention.

A gas fuel injector 1 includes, in a cylindrical main body 10 in which a fuel passage 11 is formed, an opening/closing valve 20 including a valve body 21 and a valve seat 22, the opening/closing valve 20 being configured to open and close the fuel passage 11, and a solenoid 30 configured to open the opening/closing valve 20 at the time of energization. The gas fuel injector 1 is a gas fuel injector of an electromagnetic drive type for supplying gas fuel, the pressure of whose is reduced and adjusted to a predetermined pressure, from a fuel injection hole formed in a nozzle (not illustrated) at a flow rate required by an engine. The fuel injection hole is formed at the tip of the nozzle.

When used, a fixed iron core 32 attracts a plunger 33 by energizing and exciting an electromagnetic coil 31 of the solenoid 30 to open the opening/closing valve 20, so that the gas fuel is directly injected from the fuel injection hole into the cylinder of the engine.

The main body 10 has a cylindrical shape as a whole and includes an inlet body 12 on a side for introducing the gas fuel and an outlet body 13 on a side for discharging the gas fuel.

Moreover, in the present embodiment, a retainer 40 that can reciprocate in an axial direction is provided inside the inlet body 12, and a closing spring 41 configured to bias in a valve closing direction and an adjustment spring 42 configured to bias in a valve opening direction are disposed with the retainer 40 interposed therebetween.

One end of the closing spring 41 is in contact with the retainer 40, and the other end is in contact with a stopper 43 formed inside the inlet body 12.

One end of the adjustment spring 42 is in contact with the retainer 40, and the other end is in contact with a plug 44 whose position is changeable in the axial direction inside the inlet body 12.

Note that in the present embodiment, the closing spring 41 and the adjustment spring 42 are compression coil springs, but other biasing means that exert elastic repulsive force may be used.

The opening/closing valve 20 includes the valve body 21 fixed to the plunger 33 and configured to reciprocate in the axial direction together with the plunger 33, and the valve seat 22 having a seat surface 23 configured to come into contact with and be separated from the valve body 21 and a valve hole 24 that penetrates a central portion of the seat surface 23. The opening/closing valve 20 is configured to close by attracting the valve body 21 to the valve seat 22 and bringing the valve body 21 into contact with the valve seat 22.

The solenoid 30 includes the electromagnetic coil 31, the fixed iron core 32 positioned inside the electromagnetic coil 31, and the plunger 33 (movable iron core) provided while facing the fixed iron core 32.

The fixed iron core 32 includes a cylindrical boss portion that is a part of the outlet body 13 that is a magnetic body.

The plunger 33 is fixed to the retainer 40 disposed inside the inlet body 12 on an upstream side of the opening/closing valve 20. The retainer 40 is installed between the closing spring 41 configured to bias the plunger 33 in the valve closing direction (upward direction in FIG. 1) and the adjustment spring 42 configured to bias the plunger 33 in the valve opening direction (downward direction in FIG. 1). Biasing force of the closing spring 41 is set to be larger than biasing force of the adjustment spring 42, so that the opening/closing valve 20 is closed at the time of non-energization. That is, the gas fuel injector 1 is a normally closed type.

Next, operation of the solenoid 30 will be described. When a current is supplied to the electromagnetic coil 31 (at the time of energization), the fixed iron core 32 generates a magnetic field, the plunger 33 is attracted to the fixed iron core 32, the retainer 40 fixed to the plunger 33 moves in the valve opening direction, the valve body 21 moves in the valve opening direction with the movement of the plunger 33, and the valve body 21 is separated from the seat surface 23, so that the opening/closing valve 20 opens.

When current supply to the electromagnetic coil 31 is stopped (at the time of non-energization), the magnetic field of the fixed iron core 32 disappears and the attracting of the plunger 33 to the fixed iron core 32 is cancelled, the retainer 40 fixed to the plunger 33 moves in the valve closing direction by the biasing force of the closing spring 41, the valve body 21 moves in the valve closing direction with the movement of the plunger 33, and the valve body 21 and the seat surface 23 comes into close contact with each other, so that the opening/closing valve 20 closes.

At this time, the closing spring 41 and the adjustment spring 42 disposed with the retainer 40 interposed therebetween are used, so that a dynamic flow rate can be adjusted according to set loads of both the springs.

In addition, the set load of the adjustment spring 42 is set by the plug 44 attached from a proximal end side of the inlet body 12 in the main body 10, so that the adjustment spring 42 can be easily assembled.

Furthermore, in the present embodiment, since an assembling position of the plug 44 can be changed in the axial direction, the set load of the adjustment spring 42 can be adjusted by a position of the plug 44. It is possible, for example, to set a plurality of types of set loads using one type of adjustment spring and to absorb variations during manufacturing, and the like, and the opening/closing valve 20 can be configured accurately and stably.

Note that any fixing method such as screwing or welding can be adopted for assembling the plug 44.

As described above, in accordance with an embodiment of the present invention makes it possible to easily adjust a dynamic flow rate of a normally closed gas fuel injector configured to directly inject gas fuel into a cylinder of an engine by electromagnetic driving.

### Reference Signs List

- 1: Gas fuel injector
- 10: Main body
- 11: Fuel passage
- 12: Inlet body
- 13: Outlet body
- 20: Opening/closing valve
- 21: Valve body
- 22: Valve seat
- 23: Seat surface
- 24: Valve hole
- 30: Solenoid
- 31: Electromagnetic coil
- 32: Fixed iron core
- 33: Plunger
- 40: Retainer
- 41: Closing spring
- 42: Adjustment spring
- 43: Stopper
- 44: Plug

## Claims

1. A gas fuel injector (1) of an electromagnetic drive type, the gas fuel injector (1) being configured to directly inject gas fuel into a cylinder of an engine, the gas fuel injector (1) comprising:
a cylindrical main body (10) in which a fuel passage (11) is formed;
an opening/closing valve (20) disposed in the main body (11) and configured to open and close the fuel passage (11) ;
a solenoid (30) disposed in the main body (10) and configured to open the opening/closing valve (20) at the time of energization; and
a nozzle provided at a distal end portion of the main body (10) on a downstream side of the opening/closing valve (20), the nozzle having an injection hole formed at its tip, the injection hole being inserted into the cylinder, wherein
the opening/closing valve (20) includes a valve body (21) fixed to a plunger (33) constituting the solenoid (30) and configured to reciprocate in an axial direction together with the plunger (33) and a valve seat (22) configured to come into contact with and be separated from the valve body (21) to open and close the fuel passage (11),
the plunger (33) is fixed to a retainer (40) provided on a proximal end side of the main body (10), the proximal end side being an upstream side of the opening/closing valve (20), and
the retainer (40) is installed between a closing spring (41) configured to bias the plunger (33) in a valve closing direction and an adjustment spring (42) configured to bias the plunger (33) in a valve opening direction.

2. The gas fuel injector (1) according to claim 1, wherein
a set load of the adjustment spring (42) is set by a plug (44) attached from the proximal end side of the main body (10).

3. The gas fuel injector (1) according to claim 2, wherein
an assembling position of the plug (44) is changeable in the axial direction, and the set load of the adjustment spring (42) is adjustable by a position of the plug (44).
